# EUROPÄISCHE PATENTANMELDUNG

(11) **EP 3 913 292 A1**
(43) Veröffentlichungstag der Anmeldung: **24.11.2021**
(21) Anmeldenummer: 21174411.5
(22) Anmeldetag: 18.05.2021
(51) Int. Cl.: F24F 7/00, A01K 1/00, F24F 7/013, F24F 7/02, F24F 13/02, F24F 7/06, F24F 11/00

(54) **VOLLSTÄNDIG ÜBERDACHTER STALL**

(30) Priorität: 19.05.2020 AT 504402020
(71) Anmelder: Schauer Agrotronic GmbH, 4731 Prambachkirchen (AT)
(72) Erfinder: AUINGER, Christian, 4731 Prambachkirchen (AT)
(74) Vertreter: Burger, Hannes

(57) **Zusammenfassung**

Die Erfindung betrifft einen vollständig überdachten Stall (1), insbesondere für Schweine mit einer Stallbelüftung (2), umfassend einen, bevorzugterweise thermisch isolierten, Innenbereich (3) und einen von dem Innenbereich (3) baulich durch zumindest eine Innenwand (4) getrennten Auslaufbereich (5), einen ersten Dachabschnitt (6), welcher den Innenbereich (3) überdacht, einen zweiten Dachabschnitt (7), welcher den Auslaufbereich (5) überdacht, einen Boden (8), sowie Außenwände (9), welche zusammen mit der Innenwand (4) und dem ersten Dachabschnitt (6) den Innenbereich (3) begrenzen, zumindest eine Zuluftöffnung (10), über welche eine Zuluft (11) aus einer Umgebung (12) in den Innenbereich (3) leitbar ist, wobei die zumindest eine Zuluftöffnung (10) bedarfsweise an einem Zuluftkanal (13) und/oder an einem Zuluftschlauch angeordnet ist und zumindest eine Abluftöffnung (15), über welche eine Abluft (16) in die Umgebung (12) leitbar ist. Dabei ist zumindest ein bedarfsweise zuschaltbarer Wärmetauscher (17) zum Kühlen und/oder zum Heizen der Zuluft (11) vorgesehen.

## Beschreibung

Die Erfindung betrifft einen vollständig überdachten Stall, insbesondere für Schweine, mit einer Stallbelüftung.

Vollständig überdachte Ställe, insbesondere für Schweine, sind dem Fachmann durch die AT518519 B1 bekannt. Lüftungen in Ställen sind wichtig, um zum einen ein hohes Maß an Tierwohl zu ermöglichen und um zum anderen eine hohe Produktivität des landwirtschaftlichen Betriebes zu gewährleisten. Bei sogenannten freien Lüftungen erfolgt der Luftaustausch im Wesentlichen über Lüftungsöffnungen infolge von Wind- und Temperaturunterschieden zwischen der Umgebung und dem Stall. Derartige Stallbelüftungen sind dem Fachmann weitestgehend bekannt und bedürfen deshalb an dieser Stelle keiner weiteren Erläuterung. Diese dem Stand der Technik bekannten Stallbelüftungen bieten jedoch keine ausreichend bzw. keine ganzjährig funktionsfähige Belüftungsfunktion von Ställen.

Aufgabe der vorliegenden Erfindung war es, die Nachteile des Standes der Technik zu überwinden und einen vollständig überdachten Stall, insbesondere für Schweine, mit einer Stallbelüftung zur Verfügung zu stellen, mittels dem ein ganzjährig auf das Tierwohl optimiertes Stallklima herstellbar ist.

Diese Aufgabe wird durch einen vollständig überdachten Stall, insbesondere für Schweine, mit einer Stallbelüftung gemäß den Ansprüchen gelöst.

Die Erfindung betrifft einen vollständig überdachten Stall, insbesondere für Schweine mit einer Stallbelüftung, umfassend:
- einen, bevorzugterweise thermisch isolierten, Innenbereich und einen von dem Innenbereich baulich durch zumindest eine Innenwand getrennten Auslaufbereich,
- einen ersten Dachabschnitt, welcher erste Dachabschnitt den Innenbereich überdacht,
- einen zweiten Dachabschnitt, welcher zweite Dachabschnitt den Auslaufbereich überdacht,
- einen Boden, sowie Außenwände, welche zusammen mit der Innenwand und dem ersten Dachabschnitt den Innenbereich begrenzen,
- zumindest eine Zuluftöffnung, welche derart angeordnet ist, dass über diese eine Zuluft aus einer Umgebung in den Innenbereich leitbar ist, wobei die zumindest eine Zuluftöffnung bedarfsweise an einem Zuluftkanal und/oder an einem Zuluftschlauch angeordnet ist - und zumindest eine Abluftöffnung, welche derart angeordnet ist, dass über diese eine Abluft in die Umgebung leitbar ist.
Dabei ist zumindest ein bedarfsweise zuschaltbarer Wärmetauscher zum Kühlen und/oder zum Heizen der Zuluft vorgesehen.

Der dadurch erzielte Vorteil liegt darin, dass eine ganzjährig funktionsfähige Belüftung sowie Klimatisierung von Ställen möglich ist. Da dem Tierwohl und der Tiergesundheit eine große Bedeutung zukommt, ist es wichtig, dass den Tieren der Aufenthalt im Stall so angenehm als möglich gestaltet wird. Insbesondere bei hohen Umgebungstemperaturen, wie in den Sommermonaten, ist es essentiell, ein tiergerechtes Stallklima zu gewährleisten. Dies reduziert das Stresslevel und auch die physische Belastung der Tiere, was positiverweise zur Folge hat, dass die Tiere gesünder und vitaler sind und schneller an Gewicht zunehmen. So kann zugleich auch die Produktivität des Betriebes erhöht werden. Vor allem in den Innen- bzw. Liegebereichen ist ein kühles Stallklima hinsichtlich Tierwohl und Produktivität des landwirtschaftlichen Betriebes vorteilhaft. Ein gekühlter Innen- bzw. Liegebereich begünstigt ein Liegen bzw. Ruhen der Tiere. Insbesondere Schweine neigen in gekühlten Innen- bzw. Liegebereichen weniger dazu, Suhlen auszubilden. In kalten Jahreszeiten ist auch ein Heizen des Stalles von Bedeutung. Beheizbare Ställe wirken sich ebenfalls vorteilhaft auf die Tiergesundheit und die Produktivität des landwirtschaftlichen Betriebes aus. Vor allem für die Vitalität von Jungtieren ist ein klimatisierbarer, insbesondere beheizbarer Stallbereich von gesundheitlicher Bedeutung.

Des Weiteren kann es zweckmäßig sein, wenn der zumindest eine Innenbereich im Bereich eines Dachfirstes des zumindest einen ersten Dachabschnittes zumindest eine erste Abluftöffnung aufweist, und dass der Auslaufbereich im Bereich eines Dachfirstes des zumindest einen zweiten Dachabschnittes zumindest eine zweite Abluftöffnung aufweist und dass die erste Abluftöffnung mit der zweiten Abluftöffnung strömungsverbunden ist, wobei die zweite Abluftöffnung vorzugsweise höher liegt, als die erste Abluftöffnung. Durch diese Ausführung kann eine gute Belüftung des gesamten Stalls erzielt werden.

Ferner kann vorgesehen sein, dass der zumindest eine bedarfsweise zuschaltbare Wärmetauscher im Innenbereich, insbesondere im Nahbereich der Zuluftöffnung, oder in oder an einem Zuluftkanal, oder in oder an dem Zuluftschlauch angeordnet ist. Diese Ausbildungen haben den Vorteil, dass auf flexible Art und Weise unterschiedliche bauliche Lösungen realisierbar sind.

Darüber hinaus kann vorgesehen sein, dass der zumindest eine bedarfsweise zuschaltbare Wärmetauscher zumindest als Kühlvorrichtung ausgebildet ist und/oder strömungstechnisch zumindest mit einer Kühlvorrichtung zur Erzeugung von gekühltem Kühlmedium leitungsverbunden ist. Dabei kann der Wärmetauscher mit einer Kühlvorrichtung derart strömungstechnisch leitungsverbunden sein, dass ein mittels der Kühlvorrichtung kühlbares Kühlmedium durch den Wärmetauscher führbar bzw. leitbar ist.

Gemäß einer Weiterbildung ist es möglich, dass zumindest eine verschwenkbar und/oder verschiebbar gelagerte Verschlussklappe zum Verschließen der zumindest einen Abluftöffnung ausgebildet ist. Diese Weiterbildung kann vorteilhaft sein, um einen Luftstrom zu steuern und somit das Raumklima in dem Innenbereich optimal einstellen zu können. Insbesondere kann hierdurch eine Regelung der Luftströmung unterstützt bzw. ermöglicht werden.

Ferner kann es zweckmäßig sein, wenn ein Zuluftkanal im Boden des Innenbereichs, bevorzugt im Boden eines Bedienganges für Personen, angeordnet ist. Durch das Vorsehen eines Zuluftkanals im Boden des Innenbereichs kann eine gute Belüftung des Stalls begünstigt werden. Insbesondere durch das Vorsehen eines Zuluftkanals im Boden eines Bedienganges für Personen kann zugleich eine gute Belüftung des Stalls begünstigt werden und ein eventuell nachteiliges, direktes Anströmen der Tiere im vermieden werden. Diese Ausbildung kann somit zum Wohlbefinden der Tiere mit all seinen damit verbunden positiven wirtschaftlichen Effekten beitragen.

Darüber hinaus kann vorgesehen sein, dass ein Zuluftkanal unterhalb des ersten und/oder unterhalb des zweiten Dachabschnittes angeordnet ist, bevorzugt in der Nähe einer Traufe des ersten und/oder des zweiten Dachabschnittes angeordnet ist. Bei dieser Anordnung kann eine gute Belüftung des Stalls realisiert werden, wobei zugleich keine Bodenfläche verloren geht. So kann je Tier eine größere Bewegungsfläche ermöglicht werden oder die Bodenfläche auch auf andere Art und Weise wertschöpfend genutzt werden.

Des Weiteren kann vorgesehen sein, dass ein Zuluftschlauch unterhalb des ersten und/oder des zweiten Dachabschnittes angeordnet ist, bevorzugt in der Nähe der Traufe des ersten und/oder des zweiten Dachabschnittes angeordnet ist. Bei dieser Anordnung kann eine gute Belüftung des Stalls realisiert werden, wobei zugleich keine Bodenfläche verloren geht. So kann je Tier eine größere Bewegungsfläche ermöglicht werden oder die Bodenfläche auch auf andere Art und Weise wertschöpfend genutzt werden.

Gemäß einer besonderen Ausprägung ist es möglich, dass die Stallbelüftung als Unterdrucklüftung ausgebildet ist. Dabei wird die Abluft zwangsweise abgesaugt, wobei die Zuluft selbstständig nachströmt.

Entsprechend einer vorteilhaften Weiterbildung kann vorgesehen sein, dass im Bereich des zumindest ersten Dachabschnittes und/oder im Bereich des zumindest zweiten Dachabschnittes zumindest ein Abluftventilator zum Absaugen der Abluft aus der zumindest einen Abluftöffnung angeordnet ist.

Insbesondere kann es vorteilhaft sein, wenn Stallbelüftung als Überdrucklüftung ausgebildet ist. Dabei wird Zuluft zwangsweise in den Stall gedrückt und die Abluft entweicht selbstständig.

Ferner kann vorgesehen sein, dass an der Zuluftöffnung zumindest ein Zuluftventilator zum Zuführen der Zuluft in den Innenbereich und/oder den Auslaufbereich angeordnet ist.

Darüber hinaus kann vorgesehen sein, dass die Stallbelüftung als Gleichdrucklüftung ausgebildet ist. Hier erfolgt ein gleichzeitiges bzw. gegebenenfalls auch geregeltes, zwangsweises Zuführen der Zuluft bzw. Abführen der Abluft. Diese Ausbildung kann insbesondere bei sehr großen, respektive breiten Ställen vorteilhaft sein.

Vorteilhaft ist auch eine Ausprägung, gemäß welcher vorgesehen sein kann, dass im Bereich des zumindest ersten Dachabschnittes und/oder im Bereich des zumindest zweiten Dachabschnittes zumindest ein Abluftventilator zum Absaugen der Abluft aus der zumindest einen Abluftöffnung angeordnet ist und dass an der Zuluftöffnung zumindest ein Zuluftventilator zum Zuführen der Zuluft in den Innenbereich und/oder den Auslaufbereich angeordnet ist.

Gemäß einer Weiterbildung ist es möglich, dass die zumindest eine Abluftöffnung zur Sammlung und zur Abführung der Abluft über den zumindest ersten und/oder den zumindest zweiten Dachabschnitt ausgebildet ist und dass eine Abluft-Nutzungsvorrichtung zur optional und/oder bedarfsweisen Nutzung der Abluft vorgesehen ist. Diese Weiterbildung kann auf vorteilhafte Art und Weise zu einer Effizienzsteigerung des Betriebes bzw. zu dessen Nachhaltigkeit beitragen. Beispielsweise ist es denkbar, dass eine Abwärme zum Heizen von Gebäudeabschnitten genutzt wird.

Zur Verbesserung der Luftführung können vorteilhafterweise auch weitere Lüftungsöffnungen in der Innenwand und/oder in den Außenwänden des Auslaufbereichs vorgesehen sein. Insbesondere können Lüftungsöffnungen in den Außenwänden unterhalb des zweiten Dachabschnitts ausgebildet sein. Der Auslaufbereich kann in einen oder mehrere Fressbereiche und/oder Kotbereiche unterteilt sein. Diese Maßnahmen können zu einem hohen Hygienestandard und auch zu einer effizienten Versorgung der Tiere beitragen. Durch die funktionale Trennung des Stalles in einzelne, für die Tiere wesentlichen Bereiche, kann eine einfache Reinigung erleichtert werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Querschnitt einer ersten Ausführungsform eines vollständig überdachten Stalls mit einer Unterdrucklüftung;
- Fig. 2: einen Querschnitt einer zweiten Ausführungsform eines vollständig überdachten Stalls mit einer Überdrucklüftung;
- Fig. 3: einen Querschnitt einer dritten Ausführungsform eines vollständig überdachten Stalls mit einer Gleichdrucklüftung;
- Fig. 4: einen Querschnitt einer vierten Ausführungsform eines vollständig überdachten Stalls mit einer Unterdrucklüftung und einer Abluft-Nutzungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

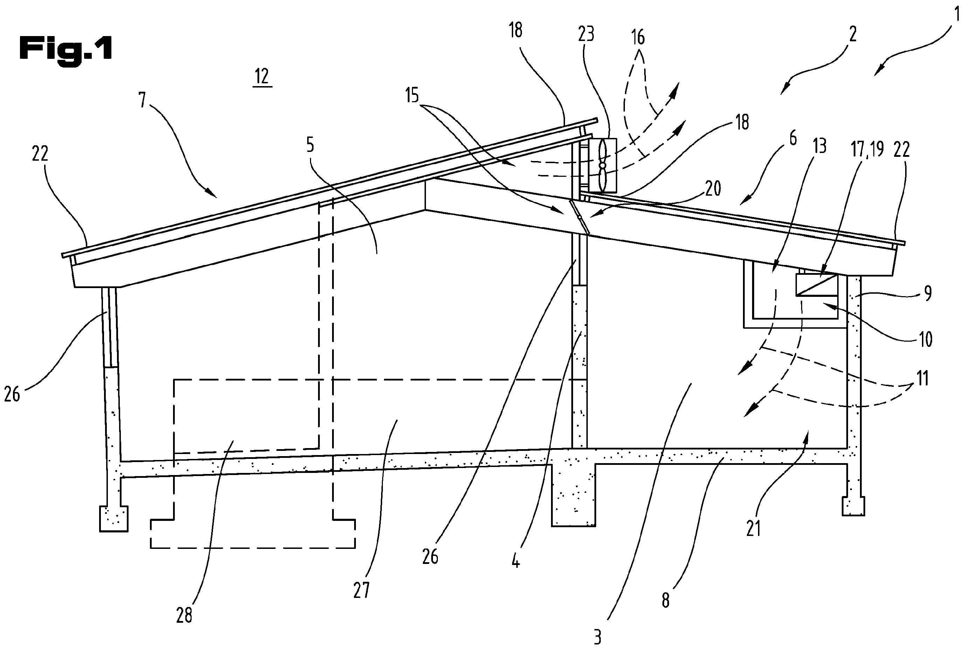

Die Figur 1 zeigt einen Querschnitt einer ersten Ausführungsform eines vollständig überdachten Stalls 1, insbesondere für Schweine mit einer Stallbelüftung 2 in der besonderen Ausbildung einer Unterdrucklüftung.

Der dargestellte vollständig überdachte Stall 1 umfasst dabei einen, bevorzugterweise thermisch isolierten, Innenbereich 3 und einen von dem Innenbereich 3 baulich durch zumindest eine Innenwand 4 getrennten Auslaufbereich 5. Vorgesehen ist auch ein erster Dachabschnitt 6, welcher den Innenbereich 3 überdacht und ein zweiter Dachabschnitt 7, welcher den Auslaufbereich 5 überdacht. Ein Boden 8, sowie Außenwände 9 begrenzen zusammen mit der Innenwand 4 und dem ersten Dachabschnitt 6 den Innenbereich 3. Die Figur 1 zeigt auch zumindest eine Zuluftöffnung 10, über welche eine Zuluft 11 aus einer Umgebung 12 in den Innenbereich 3 leitbar ist, wobei die zumindest eine Zuluftöffnung 10 bedarfsweise an einem Zuluftkanal 13 angeordnet ist. Über zumindest eine Abluftöffnung 15, ist eine Abluft 16 in die Umgebung 12 leitbar. Ein bedarfsweise zuschaltbarer Wärmetauscher 17 ist dabei zum Kühlen und/oder zum Heizen der Zuluft 11 vorgesehen. Die zumindest eine Zuluftöffnung 10 kann dabei an dem ersten Dachabschnitt 6, an den zweiten Dachabschnitt 7 oder in einer Außenwand 9 vorgesehen sein. In einer Außenwand 9 kann diese zumindest eine Zuluftöffnung 10 beispielsweise in eine Längsseite des Zuluftkanals 13 und/oder in eine Schmalseite des Zuluftkanals 13 vorgesehen sein.

Der zumindest eine Innenbereich 3 kann im Bereich eines Dachfirstes 18 des zumindest einen ersten Dachabschnittes 6 zumindest eine erste Abluftöffnung 15 aufweisen. Der Auslaufbereich 5 kann im Bereich eines Dachfirstes 18 des zumindest einen zweiten Dachabschnittes 7 zumindest eine zweite Abluftöffnung 15 aufweisen. Die erste Abluftöffnung 15 kann mit der zweiten Abluftöffnung 15 strömungsverbunden sein, wobei die zweite Abluftöffnung 15 vorzugsweise höher liegt, als die erste Abluftöffnung 15.

Der zumindest eine bedarfsweise zuschaltbare Wärmetauscher 17 kann im Innenbereich 3, insbesondere im Nahbereich der Zuluftöffnung 10, oder in oder an einem Zuluftkanal 13 angeordnet sein. In der dargestellten ersten Ausführungsform ist der Wärmetauscher 17 im Zuluftkanal 13 angeordnet. Der Wärmetauscher 17 kann zumindest als Kühlvorrichtung 19 ausgebildet sein und/oder strömungstechnisch zumindest mit einer Kühlvorrichtung 19 zur Erzeugung von gekühltem Kühlmedium leitungsverbunden sein.

Die Figur 1 zeigt auch, dass zumindest eine verschwenkbar und/oder verschiebbar gelagerte Verschlussklappe 20 zum Verschließen der zumindest einen Abluftöffnung 15 ausgebildet sein kann. Ein Zuluftkanal 13 kann unterhalb des ersten und/oder unterhalb des zweiten Dachabschnittes 6, 7 angeordnet sein. Vorzugsweise ist der Zuluftkanal 13 in der Nähe einer Traufe 22 des ersten und/oder des zweiten Dachabschnittes 6, 7 angeordnet.

Die Stallbelüftung 2 kann als Unterdrucklüftung ausgebildet sein. Im Bereich des zumindest ersten Dachabschnittes 6 und/oder im Bereich des zumindest zweiten Dachabschnittes 7 kann zumindest ein Abluftventilator 23 zum Absaugen der Abluft 16 aus der zumindest einen Abluftöffnung 15 angeordnet sein. In der dargestellten ersten Ausführungsform ist der Abluftventilator 23 im Bereich der zweiten Abluftöffnung 15 angeordnet.

Zur Verbesserung der Luftführung können weitere Lüftungsöffnungen 26 in der Innenwand 4 und/oder in den Außenwänden 9 des Auslaufbereichs 5 vorgesehen sein. Insbesondere können Lüftungsöffnungen 26 in den Außenwänden 9 unterhalb des zweiten Dachabschnitts 7 ausgebildet sein. Der Auslaufbereich 5 kann in einen oder mehrere Fressbereiche 27 und/oder Kotbereiche 28 unterteilt sein.

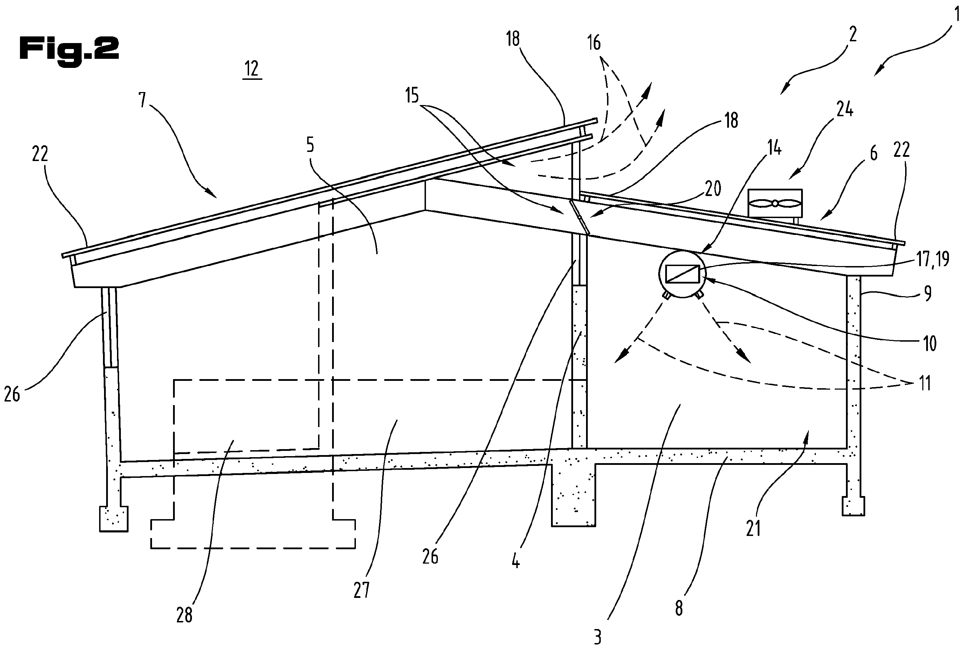

In den Figuren 2, 3 und 4 sind weitere und gegebenenfalls für sich eigenständige Ausführungsformen des vollständig überdachten Stalls 1, insbesondere für Schweine mit einer Stallbelüftung 2 gezeigt, wobei für gleiche Teile gleiche Bezugszeichen bzw. Bauteilbezeichnungen wie in der vorangegangenen Figur 1 verwendet werden. Um unnötige Wiederholungen zu vermeiden, wird auf die detaillierte Beschreibung in den vorangegangenen Figur 1 hingewiesen bzw. Bezug genommen.

Die Figur 2 zeigt einen Querschnitt einer zweiten Ausführungsform eines vollständig überdachten Stalls 1, insbesondere für Schweine mit einer Stallbelüftung 2 in der besonderen Ausbildung einer Überdrucklüftung.

Der dargestellte vollständig überdachte Stall 1 umfasst dabei einen, bevorzugterweise thermisch isolierten, Innenbereich 3 und einen von dem Innenbereich 3 baulich durch zumindest eine Innenwand 4 getrennten Auslaufbereich 5. Vorgesehen ist auch ein erster Dachabschnitt 6, welcher den Innenbereich 3 überdacht und ein zweiter Dachabschnitt 7, welcher den Auslaufbereich 5 überdacht. Ein Boden 8, sowie Außenwände 9 begrenzen zusammen mit der Innenwand 4 und dem ersten Dachabschnitt 6 den Innenbereich 3. Die Figur 2 zeigt auch zumindest eine Zuluftöffnung 10, über welche eine Zuluft 11 aus einer Umgebung 12 in den Innenbereich 3 leitbar ist, wobei die zumindest eine Zuluftöffnung 10 bedarfsweise an einem Zuluftschlauch 14 angeordnet ist. Über zumindest eine Abluftöffnung 15, ist eine Abluft 16 in die Umgebung 12 leitbar. Ein bedarfsweise zuschaltbarer Wärmetauscher 17 ist dabei zum Kühlen und/oder zum Heizen der Zuluft 11 vorgesehen. Die zumindest eine Zuluftöffnung 10 kann dabei an dem ersten Dachabschnitt 6, an den zweiten Dachabschnitt 7 oder in einer Außenwand 9 vorgesehen sein. In einer Außenwand 9 kann diese zumindest eine Zuluftöffnung 10 beispielsweise in eine Längsseite des Zuluftschlauchs 14 und/oder in eine Schmalseite des Zuluftschlauchs 14 vorgesehen sein.

Der zumindest eine bedarfsweise zuschaltbare Wärmetauscher 17 kann im Innenbereich 3, insbesondere im Nahbereich der Zuluftöffnung 10 oder an dem Zuluftschlauch 14 angeordnet sein. In der dargestellten zweiten Ausführungsform ist der Wärmetauscher 17 im Zuluftschlauch 14 angeordnet.

Ein Zuluftschlauch 14 kann unterhalb des ersten und/oder des zweiten Dachabschnittes 6, 7 angeordnet sein. Vorzugsweise kann der Zuluftschlauch 14 in der Nähe der Traufe 22 des ersten und/oder des zweiten Dachabschnittes 6, 7 angeordnet sein. Es kann aber auch bautechnisch vorteilhaft sein, wenn der Zuluftschlauch 14 in der Nähe des Dachfirstes 18 des ersten und/oder des zweiten Dachabschnittes 6, 7 angeordnet ist.

Die Stallbelüftung 2 kann als Überdrucklüftung ausgebildet sein. An der Zuluftöffnung 10 kann zumindest ein Zuluftventilator 24 zum Zuführen der Zuluft 11 in den Innenbereich 3 und/oder den Auslaufbereich 5 angeordnet sein. In der dargestellten zweiten Ausführungsform ist der Zuluftventilator 24 am ersten Dachabschnitt 6, insbesondere im Bereich der Traufe 22 angeordnet.

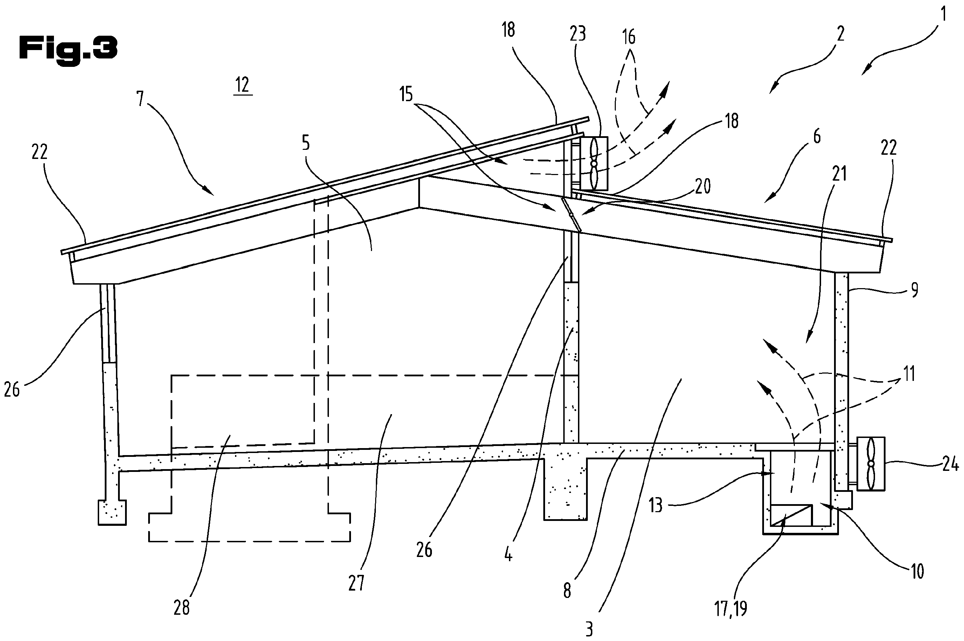

Die Figur 3 zeigt einen Querschnitt einer dritten Ausführungsform eines vollständig überdachten Stalls 1, insbesondere für Schweine mit einer Stallbelüftung 2 in der besonderen Ausbildung einer Gleichdrucklüftung.

Der dargestellte vollständig überdachte Stall 1 umfasst dabei einen, bevorzugterweise thermisch isolierten, Innenbereich 3 und einen von dem Innenbereich 3 baulich durch zumindest eine Innenwand 4 getrennten Auslaufbereich 5. Vorgesehen ist auch ein erster Dachabschnitt 6, welcher den Innenbereich 3 überdacht und ein zweiter Dachabschnitt 7, welcher den Auslaufbereich 5 überdacht. Ein Boden 8, sowie Außenwände 9 begrenzen zusammen mit der Innenwand 4 und dem ersten Dachabschnitt 6 den Innenbereich 3. Die Figur 3 zeigt auch zumindest eine Zuluftöffnung 10, über welche eine Zuluft 11 aus einer Umgebung 12 in den Innenbereich 3 leitbar ist, wobei die zumindest eine Zuluftöffnung 10 bedarfsweise an einem Zuluftkanal 13 angeordnet ist. Über zumindest eine Abluftöffnung 15, ist eine Abluft 16 in die Umgebung 12 leitbar. Ein bedarfsweise zuschaltbarer Wärmetauscher 17 ist dabei zum Kühlen und/oder zum Heizen der Zuluft 11 vorgesehen. Die zumindest eine Zuluftöffnung 10 kann dabei in einer Außenwand 9, beispielsweise in eine Längsseite des Zuluftkanals 13 und/oder in eine Schmalseite des Zuluftkanals 13 vorgesehen sein.

Der zumindest eine bedarfsweise zuschaltbare Wärmetauscher 17 kann im Innenbereich 3, insbesondere im Nahbereich der Zuluftöffnung 10, oder in oder an einem Zuluftkanal 13 angeordnet sein. In der dargestellten dritten Ausführungsform ist der Wärmetauscher 17 im Zuluftkanal 13 angeordnet. Der Zuluftkanal 13 kann im Boden 8 des Innenbereichs 3, bevorzugt im Boden 8 eines Bedienganges 21 für Personen, angeordnet sein.

Die Stallbelüftung 2 kann als Gleichdrucklüftung ausgebildet sein. Im Bereich des zumindest ersten Dachabschnittes 6 und/oder im Bereich des zumindest zweiten Dachabschnittes 7 kann zumindest ein Abluftventilator 23 zum Absaugen der Abluft 16 aus der zumindest einen Abluftöffnung 15 angeordnet sein. An der Zuluftöffnung 10 kann zumindest ein Zuluftventilator 24 zum Zuführen der Zuluft 11 in den Innenbereich 3 und/oder den Auslaufbereich 5 angeordnet sein. In der dargestellten dritten Ausführungsform ist der Zuluftventilator 24 an einer Außenwand 9 angeordnet und der Abluftventilator 23 im Bereich der zweiten Abluftöffnung 15 angeordnet.

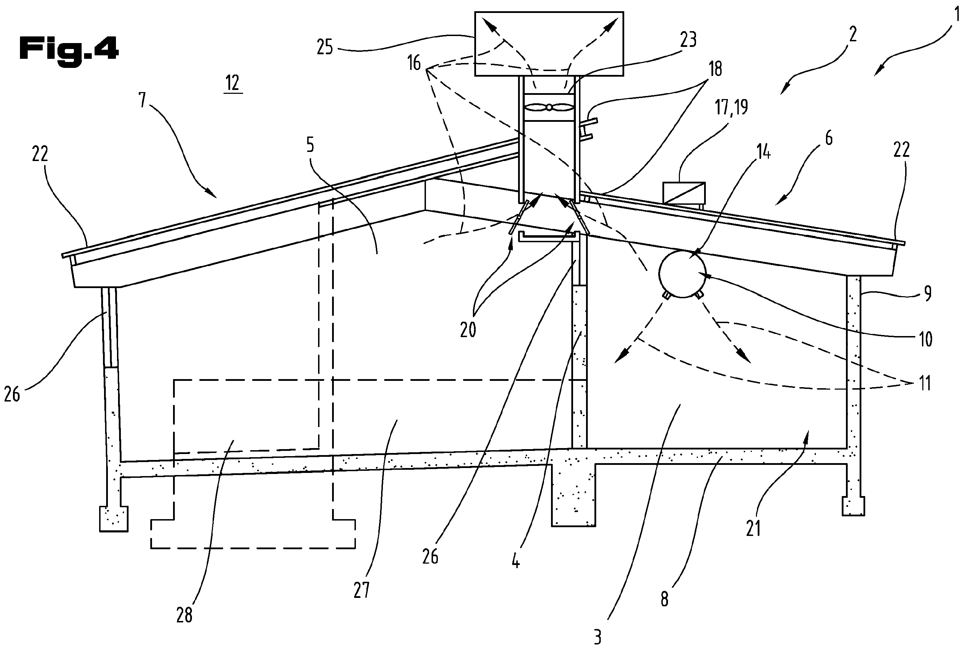

Die Figur 4 zeigt einen Querschnitt einer vierten Ausführungsform eines vollständig überdachten Stalls 1, insbesondere für Schweine mit einer Stallbelüftung 2 in der besonderen Ausbildung einer Unterdrucklüftung und mit einer Abluft-Nutzungsvorrichtung 25.

Der dargestellte vollständig überdachte Stall 1 umfasst dabei einen, bevorzugterweise thermisch isolierten, Innenbereich 3 und einen von dem Innenbereich 3 baulich durch zumindest eine Innenwand 4 getrennten Auslaufbereich 5. Vorgesehen ist auch ein erster Dachabschnitt 6, welcher den Innenbereich 3 überdacht und ein zweiter Dachabschnitt 7, welcher den Auslaufbereich 5 überdacht. Ein Boden 8, sowie Außenwände 9 begrenzen zusammen mit der Innenwand 4 und dem ersten Dachabschnitt 6 den Innenbereich 3. Die Figur 4 zeigt auch zumindest eine Zuluftöffnung 10, über welche eine Zuluft 11 aus einer Umgebung 12 in den Innenbereich 3 leitbar ist, wobei die zumindest eine Zuluftöffnung 10 bedarfsweise an einem Zuluftschlauch 14 angeordnet ist. Über zumindest eine Abluftöffnung 15, ist eine Abluft 16 in die Umgebung 12 leitbar. Ein bedarfsweise zuschaltbarer Wärmetauscher 17 ist dabei zum Kühlen und/oder zum Heizen der Zuluft 11 vorgesehen. Die zumindest eine Zuluftöffnung 10 kann dabei an dem ersten Dachabschnitt 6, an den zweiten Dachabschnitt 7 oder in einer Außenwand 9 vorgesehen sein. In einer Außenwand 9 kann diese zumindest eine Zuluftöffnung 10 beispielsweise in eine Längsseite des Zuluftschlauchs 14 und/oder in eine Schmalseite des Zuluftschlauchs 14 vorgesehen sein.

Der zumindest eine bedarfsweise zuschaltbare Wärmetauscher 17 kann im Innenbereich 3, insbesondere im Nahbereich der Zuluftöffnung 10, oder in oder an dem Zuluftschlauch 14 angeordnet sein. In der dargestellten vierten Ausführungsform ist der Wärmetauscher 17 am ersten Dachabschnitt 6, insbesondere im Bereich des Dachfirstes 18 des ersten Dachabschnitts 6 angeordnet.

Ein Zuluftschlauch 14 kann unterhalb des ersten und/oder des zweiten Dachabschnittes 6, 7 angeordnet sein. Vorzugsweise kann der Zuluftschlauch 14 in der Nähe der Traufe 22 des ersten und/oder des zweiten Dachabschnittes 6, 7 angeordnet sein. Es kann aber auch bautechnisch vorteilhaft sein, wenn der Zuluftschlauch 14 in der Nähe des Dachfirstes 18 des ersten und/oder des zweiten Dachabschnittes 6, 7 angeordnet ist.

Die Stallbelüftung 2 kann als Unterdrucklüftung ausgebildet sein. Im Bereich des zumindest ersten Dachabschnittes 6 und/oder im Bereich des zumindest zweiten Dachabschnittes 7 kann zumindest ein Abluftventilator 23 zum Absaugen der Abluft 16 aus der zumindest einen Abluftöffnung 15 angeordnet sein.

Die zumindest eine Abluftöffnung 15 kann zur Sammlung und zur Abführung der Abluft 16 über den zumindest ersten und/oder den zumindest zweiten Dachabschnitt 6, 7 ausgebildet sein. Dabei kann eine Abluft-Nutzungsvorrichtung 25 zur optional und/oder bedarfsweisen Nutzung der Abluft 16 vorgesehen sein. In der dargestellten vierten Ausführungsform ist der Abluftventilator 23 in dieser zur Sammlung und zur Abführung der Abluft 16 ausgebildeten Abluftöffnung 15 vorgesehen. Für eine verbesserte Sammlung und Abführung der Abluft 16 kann es zweckmäßig sein, wenn mehrere verschwenkbar und/oder verschiebbar gelagerte Verschlussklappen 20 zum Verschließen der zumindest einen Abluftöffnung 15 ausgebildet sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

1 Stall
2 Stallbelüftung
3 Innenbereich
4 Innenwand
5 Auslaufbereich
6 erster Dachabschnitt
7 zweiter Dachabschnitt
8 Boden
9 Außenwand
10 Zuluftöffnung
11 Zuluft
12 Umgebung
13 Zuluftkanal
14 Zuluftschlauch
15 Abluftöffnung
16 Abluft
17 Wärmetauscher
18 Dachfirst
19 Kühlvorrichtung
20 Verschlussklappe
21 Bediengang
22 Traufe
23 Abluftventilator
24 Zuluftventilator
25 Abluft-Nutzungsvorrichtung
26 Lüftungsöffnung
27 Fressbereich
28 Kotbereich

## Patentansprüche

1. Vollständig überdachter Stall (1), insbesondere für Schweine mit einer Stallbelüftung (2), umfassend:
- einen, bevorzugterweise thermisch isolierten, Innenbereich (3) und einen von dem Innenbereich (3) baulich durch zumindest eine Innenwand (4) getrennten Auslaufbereich (5),
- einen ersten Dachabschnitt (6), welcher erste Dachabschnitt (6) den Innenbereich (3) überdacht,
- einen zweiten Dachabschnitt (7), welcher zweite Dachabschnitt (7) den Auslaufbereich (5) überdacht,
- einen Boden (8), sowie Außenwände (9), welche zusammen mit der Innenwand (4) und dem ersten Dachabschnitt (6) den Innenbereich (3) begrenzen,
- zumindest eine Zuluftöffnung (10), welche derart angeordnet ist, dass über diese eine Zuluft (11) aus einer Umgebung (12) in den Innenbereich (3) leitbar ist, wobei die zumindest eine Zuluftöffnung (10) bedarfsweise an einem Zuluftkanal (13) und/oder an einem Zuluftschlauch (14) angeordnet ist
- und zumindest eine Abluftöffnung (15), welche derart angeordnet ist, dass über diese eine Abluft (16) in die Umgebung (12) leitbar ist,
**dadurch gekennzeichnet, dass**
zumindest ein bedarfsweise zuschaltbarer Wärmetauscher (17) zum Kühlen und/oder zum Heizen der Zuluft (11) vorgesehen ist.

2. Stall (1) nach Anspruch 1, **dadurch gekennzeichnet, dass** der zumindest eine Innenbereich (3) im Bereich eines Dachfirstes (18) des zumindest einen ersten Dachabschnittes (6) zumindest eine erste Abluftöffnung (15) aufweist, und dass der Auslaufbereich (5) im Bereich eines Dachfirstes (18) des zumindest einen zweiten Dachabschnittes (7) zumindest eine zweite Abluftöffnung (15) aufweist und dass die erste Abluftöffnung (15) mit der zweiten Abluftöffnung (15) strömungsverbunden ist, wobei die zweite Abluftöffnung (15) vorzugsweise höher liegt, als die erste Abluftöffnung (15).

3. Stall (1) nach einem der Ansprüche 1 oder 2, **dadurch gekennzeichnet, dass** der zumindest eine bedarfsweise zuschaltbare Wärmetauscher (17) im Innenbereich (3), insbesondere im Nahbereich der Zuluftöffnung (10), oder in oder an einem Zuluftkanal (13), oder in oder an dem Zuluftschlauch (14) angeordnet ist.

4. Stall (1) nach einem der vorhergehenden Ansprüche, **dadurch gekennzeichnet, dass** der zumindest eine bedarfsweise zuschaltbare Wärmetauscher (17) zumindest als Kühlvorrichtung (19) ausgebildet ist und/oder strömungstechnisch zumindest mit einer Kühlvorrichtung (19) zur Erzeugung von gekühltem Kühlmedium leitungsverbunden ist.

5. Stall (1) nach einem der vorhergehenden Ansprüche, **dadurch gekennzeichnet, dass** zumindest eine verschwenkbar und/oder verschiebbar gelagerte Verschlussklappe (20) zum Verschließen der zumindest einen Abluftöffnung (15) ausgebildet ist.

6. Stall (1) nach einem der vorhergehenden Ansprüche, **dadurch gekennzeichnet, dass** ein Zuluftkanal (13) im Boden (8) des Innenbereichs (3), bevorzugt im Boden (8) eines Bedienganges (21) für Personen, angeordnet ist.

7. Stall (1) nach einem der vorhergehenden Ansprüche, **dadurch gekennzeichnet, dass** ein Zuluftkanal (13) unterhalb des ersten und/oder unterhalb des zweiten Dachabschnittes (6, 7) angeordnet ist, bevorzugt in der Nähe einer Traufe (22) des ersten und/oder des zweiten Dachabschnittes (6, 7) angeordnet ist.

8. Stall (1) nach einem der vorhergehenden Ansprüche, **dadurch gekennzeichnet, dass** ein Zuluftschlauch (14) unterhalb des ersten und/oder des zweiten Dachabschnittes (6, 7) angeordnet ist, bevorzugt in der Nähe der Traufe (22) des ersten und/oder des zweiten Dachabschnittes (6, 7) angeordnet ist.

9. Stall (1) nach einem der vorhergehenden Ansprüche, **dadurch gekennzeichnet, dass** die Stallbelüftung (2) als Unterdrucklüftung ausgebildet ist.

10. Stall (1) nach Anspruch 9, **dadurch gekennzeichnet, dass** im Bereich des zumindest ersten Dachabschnittes (6) und/oder im Bereich des zumindest zweiten Dachabschnittes (7) zumindest ein Abluftventilator (23) zum Absaugen der Abluft (16) aus der zumindest einen Abluftöffnung (15) angeordnet ist.

11. Stall (1) nach einem der Ansprüche 1 bis 8, **dadurch gekennzeichnet, dass** die Stallbelüftung (2) als Überdrucklüftung ausgebildet ist.

12. Stall (1) nach Anspruch 11, **dadurch gekennzeichnet, dass** an der Zuluftöffnung (10) zumindest ein Zuluftventilator (24) zum Zuführen der Zuluft (11) in den Innenbereich (3) und/oder den Auslaufbereich (5) angeordnet ist.

13. Stall (1) nach einem der Ansprüche 1 bis 8, **dadurch gekennzeichnet, dass** die Stallbelüftung (2) als Gleichdrucklüftung ausgebildet ist.

14. Stall (1) nach Anspruch 13, **dadurch gekennzeichnet, dass** im Bereich des zumindest ersten Dachabschnittes (6) und/oder im Bereich des zumindest zweiten Dachabschnittes (7) zumindest ein Abluftventilator (23) zum Absaugen der Abluft (16) aus der zumindest einen Abluftöffnung (15) angeordnet ist und dass an der Zuluftöffnung (10) zumindest ein Zuluftventilator (24) zum Zuführen der Zuluft (11) in den Innenbereich (3) und/oder den Auslaufbereich (5) angeordnet ist.

15. Stall (1) nach einem der vorhergehenden Ansprüche; **dadurch gekennzeichnet, dass** die zumindest eine Abluftöffnung (15) zur Sammlung und zur Abführung der Abluft (16) über den zumindest ersten und/oder den zumindest zweiten Dachabschnitt (6, 7) ausgebildet ist und dass eine Abluft-Nutzungsvorrichtung (25) zur optional und/oder bedarfsweisen Nutzung der Abluft (16) vorgesehen ist.
